# EUROPÄISCHE PATENTSCHRIFT

(11) **EP 1 264 379 B1**
(45) Veröffentlichungstag und Bekanntmachung des Hinweises auf die Patenterteilung: **21.10.2015**
(21) Anmeldenummer: 01916918.4
(22) Anmeldetag: 12.03.2001
(51) Int. Cl.: H02H 3/12

(54) **ANORDNUNG ZUM VERSTELLEN VON BEWEGLICHEN MÖBELTEILEN**
ASSEMBLY FOR ADJUSTING MOBILE ELEMENTS OF FURNITURE
DISPOSITIF DE REGLAGE D'ELEMENTS MOBILIER

(30) Priorität: 14.03.2000 DE 10012050
(43) Veröffentlichungstag der Anmeldung: 11.12.2002
(73) Patentinhaber: DewertOkin GmbH, 32278 Kirchlengern (DE)
(72) Erfinder: KOCH, Dietmar, 51645 Gummersbach (DE)
(74) Vertreter: Lippert, Stachow & Partner
(86) Internationale Anmeldenummer: PCT/DE2001/000925
(87) Internationale Veröffentlichungsnummer: WO 2001/069745

(56) Entgegenhaltungen:
- US-A- 5 528 449

## Beschreibung

Die Erfindung betrifft eine Anordnung zum Verstellen von beweglichen Möbelteilen mit einem Motor, der einen ersten und einen zweiten Anschluß aufweist, einer den Motor steuerenden Steuerschaltung, die mit mindestens einem ersten Tastenschalter zum Steuern des Motors versehen ist, einer Spannungsversorgungsschaltung mit einem Betriebsspannungsausgang, mit einer Netzverbindung, die zwischen einem mit einem Wechselspannungsnetz verbindbaren Netzstecker und der Spannungsversorgungsschaltung angeordnet ist, mit einem Relais, das einen Relaisschalter und einen den Relaisschalter steuernden Steuereingang aufweist, wobei der Relaisschalter in der Netzverbindung liegt und sich im nicht erregten Zustand in AUS-Stellung befindet, und mit einer Hilfsspannungsquelle, die mit dem Steuereingang des Relais verbindbar ist.

Eine Anordnung der eingangs genannten Art ist aus der europäischen Patentschrift 0 615 667 B1 bekannt. Die darin beschriebene Anordnung zur Netzfreischaltung von Steuereinrichtungen bezieht sich auf eine Anordnung zum Verstellen von beweglichen Möbelteilen, die mit zwei Motoren versehen ist. Ein Motor weist einen ersten und einen zweiten Anschluß auf. Weiterhin ist für jeden Motor eine Steuerschaltung vorgesehen, die aus einem ersten und einem zweiten Tastschalter besteht. Zu der Steuerschaltung eines Motors gehört auch ein erstes und ein zweites Relais. Die Relaisspule des ersten Relais liegt über dem ersten Tastschalter und die Relaisspule des zweiten Relais über dem zweiten Tastschalter an Betriebspotential. Die Relaisschalter beider Relais sind als Wechselschalter ausgebildet, deren einer Wechselkontakt mit dem Betriebsspannungsausgang der einen Polarität und der andere Wechselkontakt mit dem Betriebsspannungsausgang der anderen Polarität verbunden ist. Der Mittenkontakt des Relaisschalters des ersten Relais ist mit dem ersten Anschluß des Motors und der Mittenkontakt des Relaisschalter des zweiten Relais mit dem zweiten Anschluß des Motors verbunden. Im nicht erregten Zustand stellen die Relaisschalter jeweils eine Verbindung zwischen ihrem Mittenkontakt und dem Betriebsspannungsausgang mit derselben Polarität wie am jeweils anderen Relaisschalter her.

Bei dieser bekannten Anordnung ist die Betriebsspannungsquelle als Gleichspannungsquelle und jeder Motor als Gleichspannungsmotor ausgebildet. Durch die Gestaltung der Steuerschaltung wird damit eine Richtungsschaltung der Motoren erreicht. Wird nämlich beispielsweise der erste Tastschalter betätigt, so zieht das erste Relais an und schaltet den Relaisschalter um. Wenn bis dahin der erste und der zweite Anschluß des Motors auf dem gleichen Potential lagen, so wird durch das Umschalten jetzt der erste Anschluß auf das jeweils andere Betriebsspannungspotential gelegt. Der Motor führt daraufhin eine Bewegung in eine Richtung aus, bis der erste Tastschalter losgelassen wird. Wird daraufhin der zweite Tastschalter gedrückt, so erfolgt durch ein Anziehen des zweiten Relais eine Polaritätsumkehr an dem Motor und der Motor bewegt sich in die andere Richtung.

In dieser bekannten Anordnung ist auch ein drittes Relais vorgesehen, das einen Relaisschalter aufweist, der in der Netzzuleitung zu der Spannungsversorgungsschaltung liegt. Parallel zum Betriebsspannungsausgang der Spannungsversorgungsschaltung liegt eine Hilfsspannungsquelle. Diese Hilfsspannungsquelle ist über jeden der Tastschalter mit dem Steuereingang des dritten Relais verbunden.

Da sich der Relaisschalter des dritten Relais im nicht erregten Zustand in AUS-Stellung befindet, ist zunächst die Spannungsversorgungsschaltung vom Netz getrennt. Wird nun einer der Tastschalter betätigt, so wird die Spannung der Hilfsspannungsquelle über den Taster an den Steuereingang des dritten Relais gelegt. Dieses dritte Relais zieht daraufhin an und bringt seinen Relaissschalter in EIN-Stellung. Die Spannungsversorgungsschaltung wird daraufhin mit Netzspannung verbunden und stellt an ihrem Betriebsspannungsausgang eine Betriebsspannung zur Verfügung. Somit kann auch jedes der Relais, die zu der Steuerschaltung gehören, anziehen, sofern ihr zugehöriger Tastschalter gedrückt ist. Der Motor führt daraufhin seine Stellbewegung aus. Das dritte Relais bleibt während dieser Zeit angezogen, da es nun an seinem Steuereingang mit Betriebsspannung versorgt wird. Wird der Tastschalter losgelassen, wenn beispielsweise die erforderliche Stellbewegung beendet ist, so fällt das zu dem jeweiligen Tastschalter gehörende Relais ebenso ab, wie das dritte Relais und die Schaltungsanordnung ist wieder vom Netz getrennt.

Nachteilig ist bei dieser Anordnung, daß jedem Tastschalter ein Relais zuzuordnen ist, wodurch die Schaltungsanordnung zum einen einen großen Raumbedarf aufweist und zum anderen einen hohen Herstellungs- und Kostenaufwand zeigt.

Der Erfindung liegt somit die Aufgabe zugrunde, eine Anordnung zum Verstellen von beweglichen Möbelteilen anzugeben, die unter Beibehaltung einer Netzfreischaltung, daß heißt einer Trennung vom Netz während der Zeit, in der keine Steuerfunktionen auszuführen sind und einer Netzzuschaltung bei einem Erhalt von Steuerbefehlen, einfacher und kostengünstiger aufzubauen ist.

Gemäß der Erfindung wird diese Aufgabe dadurch gelöst, daß der erste Tastschalter mit dem Motor und dem Betriebsspannungsausgang einen Stromkreis bildet. Weiterhin ist entweder der Steuereingang des Netztrennrelais dem Motor parallel geschaltet oder eine als Graetzbrücke bekannte Gleichrichterbrücke wird zwischen den Motor und dem Steuereingang des Netztrennrelais geschaltet. Eine derartige Gleichrichterbrücke ist mit vier Dioden versehen, von denen zwei erste Dioden mit ihren Kathoden in einem Plusknoten und mit ihren Anoden mit den Kathoden der beiden zweiten Dioden in je einem Wechselknoten zusammengeschaltet sind. Die Anoden der beiden zweiten Dioden sind in einem Minusknoten zusammengeschaltet. Dabei ist der erste und der zweite Anschluß des Motors mit je einem Wechselknoten verbunden. Der Plus- und der Minusknoten ist jeweils mit dem Steuereingang des Netztrennrelais verbunden.

Die ersten Alternative sieht die einfachste Realisierung der erfindungsgemäßen Lösung vor, indem von dem ersten Tastschalter sowohl der Motor als auch das Netztrennrelais direkt gesteuert wird. Dabei befindet sich der Relaisschalter des Netztrennrelais im Ruhezustand in AUs-Stellung. Folglich ist die Spannungsversorgungsschaltung nicht mit dem Netz verbunden. Wird der erste Tastschalter zum Zwecke des Anlaufens des Motors betätigt, so wird die Spannung aus der Hilfsspannungsquelle über den ersten Tastschalter an das Netztrennrelais angelegt, welches anzieht und die Spannungsversorgungsschaltung mit dem Netz verbindet. Sodann liegt am Betriebsspannungsausgang Betriebsspannung an und das Netztrennrelais wird durch die Betriebsspannung im angezogenen Zustand gehalten, solange der erste Tastschalter gedrückt ist. Wird dieser losgelassen, bricht die Spannung am Steuereingang des Netztrennrelais ab und dieses Netztrennrelais fällt ab. Die Spannungsversorgungsschaltung ist danach nicht mehr mit dem Netz verbunden, da sich der Relaisschalter des Netztrennrelais wieder in AUS-Stellung befindet.

Die zweite Alternative der erfindungsgemäßen Lösung zeigt die gleiche Wirkungsweise. Mit Betätigung des Tastschalters liegt nämlich am Steuereingang des Netztrennrelais über die Gleichrichterbrücke die Spannung aus der Hilfsspannungsquelle an, wodurch dieses anzieht und die Spannungsversorgungsschaltung mit dem Netz verbindet, solange der Tastschalter gedrückt ist. Durch das Zwischenschalten der Gleichrichterbrücke wird jedoch eine Rückwirkung von dem Steuereingang des Netztrennrelais auf die Anschlüsse des Motors vermieden. Dadurch kann beispielsweise der Einsatz mehrerer Motoren realisiert werden, die alle mit einem Netztrennrelais arbeiten, wie untenstehend weiter erläutert wird.

In einer Ausgestaltung der Erfindung ist vorgesehen, daß der Betriebsspannungsausgang als Gleichspannungsausgang und der Motor als Gleichspannungsmotor ausgebildet.

Die Gestaltung der Erfindung mit Gleichspannungsmotoren bietet neben der günstigen Drehmomentenverteilung auch den Vorteil der einfachen Richtungssteuerung der Drehrichtung der Motoren.

Insbesondere zur einfachen Drehrichtungssteuerung der Gleichsspannungsmotoren ist in einer weiteren Ausgestaltung der Erfindung vorgesehen, daß ein zweiter Tastschalter angeordnet ist, und daß sowohl der erste als auch der zweite Tastschalter als Wechselschalter ausgebildet ist. Deren einer Wechselkontakt ist mit dem Betriebsspannungsausgang der einen Polarität und deren jeweils anderer Wechselkontakt ist mit der Betriebsspannung der anderen Polarität verbunden. Der Mittenkonakt des ersten Tastschalters ist mit ersten Anschluß des Motors und der Mittenkontakt des zweiten Tastschalters mit dem zweiten Anschluß des Motors verbunden. Jeder Tastschalter weist im unbetätigten Zustand eine Verbindung zwischen seinem Mittenkontakt und dem Betriebsspannungsausgang mit derselben Polarität auf, wie der jeweils andere Tastschalter.

Durch diese Anordnung wird es möglich, den Motor mit dem ersten Tastschalter in eine Richtung und mit dem zweiten Tastschalter in die andere Richtung drehen zu lassen. Um eine Drehung zu bewirken, ist es dabei erforderlich, daß die Tastschalter alternativ betätigt werden. Jedoch wäre ein gleichzeitiges Betätigen nicht gefährlich. Es würde nur keine Bewegung des Motors hervorrufen.

In einer weiteren Ausgestaltung der Erfindung ist vorgesehen, daß die Motoranordnung, bestehend aus Motor und erstem oder erstem und zweitem Tastschalter zumindest ein zweites Mal angeordnet ist. Dabei ist entweder für jede Motoranordnung je ein Netztrennrelais vorgesehen, dessen Steuereingang jeweils zu dem zugehörigen Motor und die Relaisschalter aller Netztrennrelais zu einander parallel geschaltet sind. Alternativ dazu ist für jede Motoranordnung eine Gleichrichterbrücke vorgesehen, deren Wechselknoten mit den Anschlüssen des jeweiligen Motors und dessen Plus- und Minusknoten jeweils gemeinsam mit dem Steuereingang ein- und desselben Netztrennrelais verbunden sind.

Durch diese Ausgestaltung wird es möglich, mehrere Motoren einzusetzen, die von eine Steuerschaltung direkt ansteuerbar sind, ein zwischengeschaltetes Relais also vermieden wird und dennoch eine Netzfreischaltung realisiert werden kann. Wenn ein Motor eingeschaltet wird, liegt zwischen seinem ersten und seinem zweiten Anschluß Betriebsspannung an. Würden mehrere Motoren dann auf ein- und dasselbe Netztrennrelais geschaltet werden, so würde es über die Parallelschaltung des Netztrennrelais zu den Motoren zu einem Übergreifen der Betriebsspannung von dem eingeschalteten auf die anderen Motoren kommen. Dieses Übergreifen wird entweder durch die Gleichrichterbrükke, die zwischen jedem Motor und dem einen Netztrennrelais geschaltet ist oder durch die Anordnung mehrerer separater Netztrennrelais vermieden.

In einer weiteren Ausgestaltung der Erfindung ist vorgesehen, daß die Hilfsspannungsquelle aus einer Wechselspannungsquelle besteht. Hierbei ist es vorstellbar, daß ein Hilfstransformator vorgesehen ist, dessen Sekundärausgang zu dem Betriebsspannungsausgang der Spannungsversorgungsschaltung parallel geschaltet ist. Dadurch wird eine Wechselspannung als Hilfsspannung zum Einschalten des Netztrennrelais bereit gestellt.

Eine derartige Beaufschlagung mit einer Hilfswechselspannung ist sowohl bei einer Ausführung mit einer Wechselspannung als Betriebsspannung und mit Wechselspannungsmotoren vorstellbar, als auch bei einer Gleichspannung als Betriebsspannung. Im letzteren Falle könnte die Wechselspannung aus der Hilfsspannungsquelle entweder gleichgerichtet werden oder die Hilfsspannungsquelle einen so hohen Innenwiderstand aufweisen, daß Gleichspannungsbauelemente nicht zerstört werden oder aber auch die Hilfsspannungsquelle sofort abschalten, sobald das Netztrennrelais angezogen hat, wofür beispielsweise ein seperater Relaisschalter vorgesehen sein kann.

Festzustellen ist allerdings hierbei, daß keine vollständige Netzfreischaltung erfolgt, da ja die Hilfsspannungsquelle nach wie vor als Spannungsquelle in der Schaltungsordnung netzverbunden bleibt.

Eine günstigere Ausgestaltung der Erfindung ist darin zu sehen, daß die Hilfsspannungsquelle aus einer Gleichspannungsquelle besteht. Grundsätzlich ist es möglich, daß die Gleichspannungsquelle auch wieder netzverbunden realisiert wird, beispielsweise mittels eines Transformators und einer nachfolgenden Gleichrichterschaltung. Zweckmäßigerweise kann aber die Gleichspannungsquelle als eine vom Netz galvanisch getrennte Gleichspannungsquelle gestaltet werden.

In einer Ausgestaltung der Erfindung wird dies dadurch realisiert, daß die Hilfsspannungsquelle aus einem Kondensator besteht. Zweckmäßigerweise werden hierfür Kondensatoren mit relativ geringen Leckströmen eingesetzt, so daß diese eine einmal aufgebrachte Ladung über einen vertretbar langen Zeitraum halten. In aller Regel werden nämlich erfindungsgemäße Anordnungen im Zeitraum von einer Woche zumindest einmal betätigt. Dieser Zeitraum wird ausreichend sein, die Ladung auf dem Kondensator zu erhalten.

Für den Fall, daß längere Zeiträume einer Nichtbenutzung der erfindungsgemäßen Anordnung zu überbrücken sind, kann zur Erhöhung der Betriebssicherheit an dem Relaiskontakt des Netztrennrelais eine manuelle Betätigungsvorrichtung vorgesehen sein.

Eine andere Möglichkeit zur sicheren Erhaltung der Ladung an dem Kondensator als Hilfsspannungsquelle ist darin zu sehen, daß eine Impulsgeberschaltung vorgesehen ist, die einen Impuls aufgang aufweist, der mit dem Netztrennrelais zusätzlich verbunden ist. Durch diese Impulsgeberschaltung wird das Netztrennrelais zeitlich intermittierend geschalten, wodurch für einen kurzen Zeitraum die Spannungsversorgungsschaltung an ihrem Betriebsspannungsausgang eine Betriebsspannung bereitstellen wird, wodurch der Kondensator wieder auf Betriebsspannungspotential aufgeladen wird. Der Abstand zwischen den Impulsen wird sich nach dem Leckstrom des Kondensators richten, so daß auch relativ preiswerte Kondensatoren eingesetzt werden können, die zumeist auch relativ hohe Leckströme aufweisen. Selbst wenn ein zeitlicher Impulsabstand von mehreren Minuten gewählt werden würde, wäre der Einfluß des Wechselspannungsnetzes, der durch die Netzfreischaltung grundsätzlich vermieden werden soll, vollkommen vernachlässigbar.

Eine andere Ausgestaltung der Hilfspannungsquelle als Gleichspannungsquelle besteht darin, daß die Hilfsspannungsquelle aus einer Batterie besteht. Da Batterien Standzeiten von mehr als einem Jahr haben können, insbesondere dann, wenn sie nur äußerst selten belastet werden, wie im hier vorliegenden Falle, ist durch eine Batterie eine ständige Betriebsbereitschaft gegeben. Einer fehlenden Betriebsbereitschaft bei einer entladenen Batterie kann durch einen regelmäßigen Wartungszyklus der erfindungsgemäßen Anordnung vorgebeugt werden.

In einer besonders günstigen Ausgestaltung der Erfindung ist vorgesehen, daß das Netztrennrelais einen zweiten Relaischalter aufweist oder, für den Fall, daß mehrere Netztrennrelais vorhanden sind, jedes Netztrennrelais einen zweiten Relaisschalter aufweist und daß jeder Relaisschalter in je einer Leitung der Netzverbindung liegt.

Durch diese Ausgestaltung wird eine doppelpolige Abschaltung der Netzzuleitung realisiert. Damit können von der nachfolgenden Gestaltung nicht nur elektromagnetische Wechselfelder sondern auch elektrische Wechselfelder ferngehalten werden.

Die Erfindung soll nachfolgend anhand eines Ausführungsbeispieles näher erläutert werden.

In den zugehörigen Zeichnungen zeigt
- Fig. 1: eine erfindungsgemäße Anordnung mit einem Motor,
- Fig. 2: eine erfindungsgemäße Anordnung mit einem zusätzlich impulsgeschalteten Netztrennrelais,
- Fig. 3: eine Anordnung von zwei Motoren, die über je eine Gleichrichterbrücke entkoppelt sind,
- Fig. 4: eine erfindungsgemäße Anordnung mit drei über je eine Gleichrichterbrücke entkoppelten Motoren und
- Fig. 5: eine erfindungsgemäße Anordnung mit drei Motoren, denen je ein Netztrennrelais zugeordnet ist.

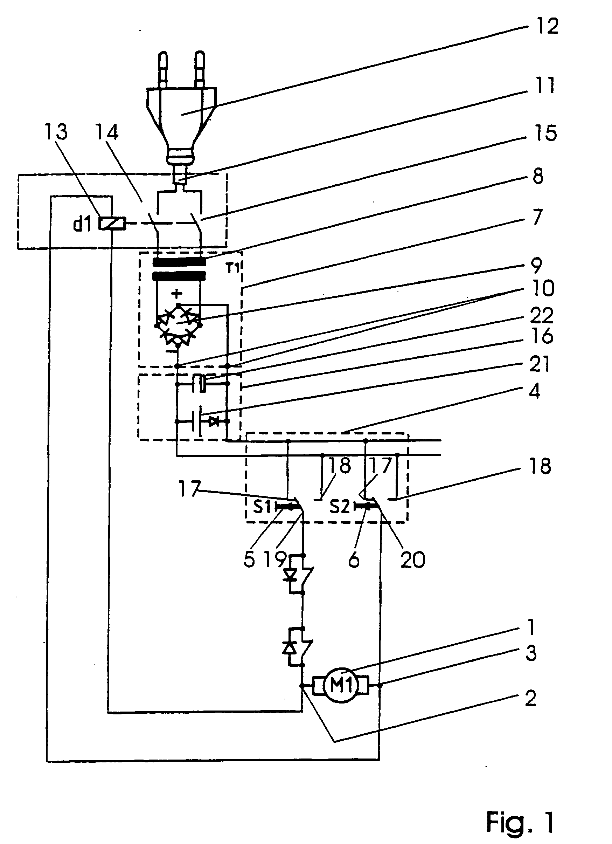

Die in Fig. 1 dargestellte Anordnung ist mit einem ersten Motor 1 ausgestattet. Dieser erste Motor 1 weist einen ersten Anschluß 2 und einen zweiten Anschluß 3 auf. Weiterhin ist eine Steuerschaltung 4 vorgesehen, die mit einem ersten Tastschalter 5 und einem zweiten Tastschalter 6 ausgestattet ist. Eine Spannungsversorgungsschaltung 7 beinhaltet einen Transformator 8 und eine Gleichrichterschaltung 9. Der Gleichspannungsausgang der Gleichrichterschaltung 9 stellt gleichzeitig den Betriebsspannungsausgang 10 der Spannungsversorgungsschaltung 7 dar. Weiterhin ist die Anordnung mit einer Netzverbindung 11 versehen, die zwischen einem mit einem nicht näher dargestellten wechselspannungsnetz verbindbaren Netzstecker 12 und der Spannungsversorgungsschaltung 7 angeordnet ist.

Zum Trennen der Netzverbindung 11 zwischen dem Netzstecker 12 und der Spannungsversorgungsschaltung 7 ist ein Netztrennrelais 13 vorgesehen. Dieses Netztrennrelais 13 weist einen ersten Relaischalter 14 und einen zweiten Relaischalter 15 auf. Diese Relaischalter 14 und 15 liegen in je einer Leitung der Netzverbindung 11. Sie befinden sich im nicht erregten Zustand des Netztrennrelais 13, d. h. in dem Zustand, daß die Relaisspule des Netztrennrelais keine Spannung erhält, in AUS-Stellung, d. h. sie sind geöffnet und trennen die Netzzuleitung. Weiterhin ist eine Hilsspannungsquelle 16 vorgesehen, die zu dem Betriebsspannungsausgang 10 parallel geschaltet ist.

Der erste Tastschalter 5 und der zweite Tastschalter 6 bilden mit dem Motor 1 und dem Betriebsspannungsausgang 10 einen Stromkreis. Der erste Tastschalter 5 und der zweite Tastschalter 6 sind jeweils als Wechselschalter ausgebildet. Deren einer Wechselkontakt 17 ist mit dem Betriebsspannungsausgang der Polarität plus (+) und der andere Wechselkontakt 18 mit dem Betriebsspannungsausgang der Polarität minus (-) verbunden. Der Mittenkontakt 19 des ersten Tastschalters 5 ist mit dem ersten Anschluß 2 des Motors 1 verbunden. Der Mittenkontakt 20 des zweiten Tastschalters 6 ist mit dem zweiten Anschluß 3 des Motors 1 verbunden. Dabei ist jeder Tastschalter 5 und 6 so konfiguriert, daß er im unbetätigten Zustand eine Verbindung zwischen seinem Mittenkontakt 19 und 20 und dem Betriebsspannungsausgang 10 mit der Polarität plus (+) herstellt.

Wie in Fig. 1 dargestellt, ist der Steuereingang des Netztrennrelais 13 dem Motor 1 parallel geschaltet.

Wird nun beispielsweise der erste Tastschalter 5 betätigt, so wird durch die Parallelschaltung von Motor 1 und Netztrennrelais 13 an die Spule des Netztrennrelais 13 die Spannung aus der Hilsspannungsquelle 16 angelegt. Das Netztrennrelais 13 betätigt daraufhin den ersten Relaisschalter 14 und den zweiten Relaischalter 15, die damit in EIN-Stellung gehen und die Netzzuleitung mit der Spannungsversorgungsschaltung 7, d. h. insbesondere mit der Primärseite des Transformators 8 verbinden. Daraufhin wird am Betriebsspannungsausgang 10 der Spannungsversorgungsschaltung 7 eine Betriebsspannung zur Verfügung gestellt, wodurch an dem Motor 1 Betriebspotiental anliegt und er sich folglich bewegen kann. Dies geschieht solange, wie der erste Tastschalter 5 gedrückt ist, wobei die Bewegung des Motors 1 auch durch nicht näher dargestellte Endschalter begrenzt werden kann. Sobald der erste Tastschalter 5 wieder losgelassen wird, geht er in seine ursprüngliche Ausgangsstellung zurück, wodurch am ersten Anschluß 2 des Motors 1 wieder Pluspotiental anliegt, genau wie am zweiten Anschluß 3 des Motors 1. Der Motor 1 kommt infolge des fehlenden Potientalunterschiedes zum Stillstand.

Bei einer Betätigung des zweiten Tastschalters 6 läuft der gleiche Vorgang wieder ab, mit dem Unterschied, daß der erste Motor 1 eine Polaritätsumkehr zwischen seinen ersten Anschluß 2 und seinem zweiten Anschluß 3 erfährt, der eine Richtungsumkehr des Motors 1 bewirkt.

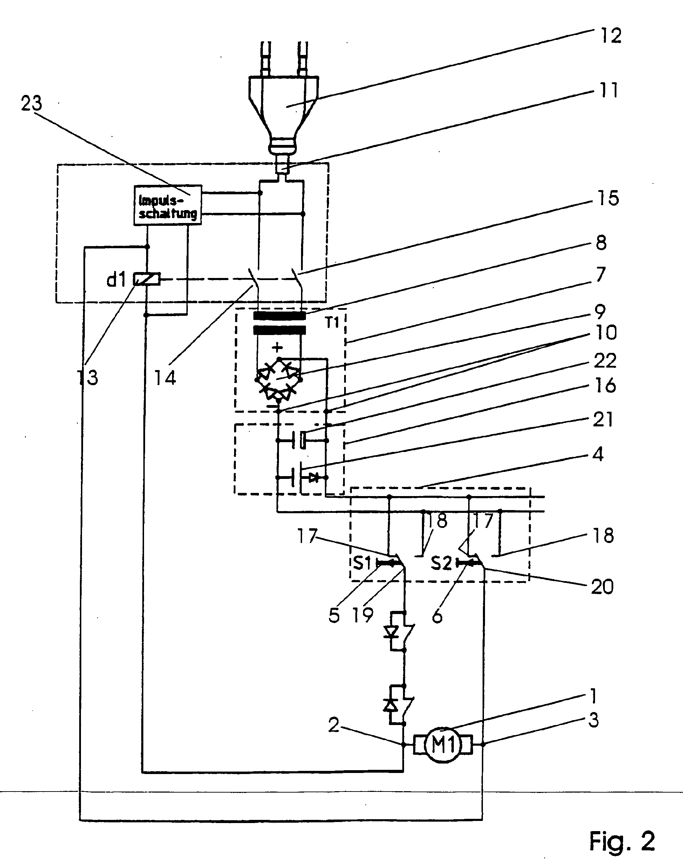

Wie in Figur 1 so besteht auch in Figur 2 die Hilfspannungsquelle 16 aus einer Batterie 21, der ein Kondensator 22 parallel geschaltet ist. Durch diese Parallelschaltung wird ständig eine Hilfsspannung mit einem geringen Innenwiderstand zur Verfügung gestellt, so daß ein schnelles Ansprechen des Netztrennrelais erreicht wird. Obwohl der Kondensator 22 einerseits von der Batterie 21 in einem ständigen Ladungszustand gehalten wird, der zusätzlich durch den Betriebsspannungsausgang 10 ständig aufgefrischt wird, kann es im schlimmsten Falle vorkommen, daß die Batterie 21 entladen ist und die gesamte Schaltungsanordnung eine solange Zeit nicht betätigt worden ist, daß der eigene Leckstrom des Kondensators 22 diesen selbst entladen hat. Um auch diesem Fall vorzubeugen, ist einr Impulsgeberschaltung 23 vorgesehen, deren Impulsausgang mit dem Steuereingang des Netztrennrelais 13 zusätzlich verbunden ist. Diese Impulsgeberschaltung 23 schaltet intermittierend das Netztrennrelais 13 ein, so daß für die Zeitdauer des Impulses der Betriebsspannungsausgang 10 eine Betriebsspannung bereitstellt, die den Kondensator 22 wieder auflädt. Wenn auch während des Auftretens des Impulses auch der Impulsgeberschaltung 23 die Anordnung nicht netzfreigeschaltet ist, so geschieht doch so selten und für einen so geringen Moment, daß der Einfluß des Wechselspannungsnetzes vollkommen vernachlässigt werden kann.

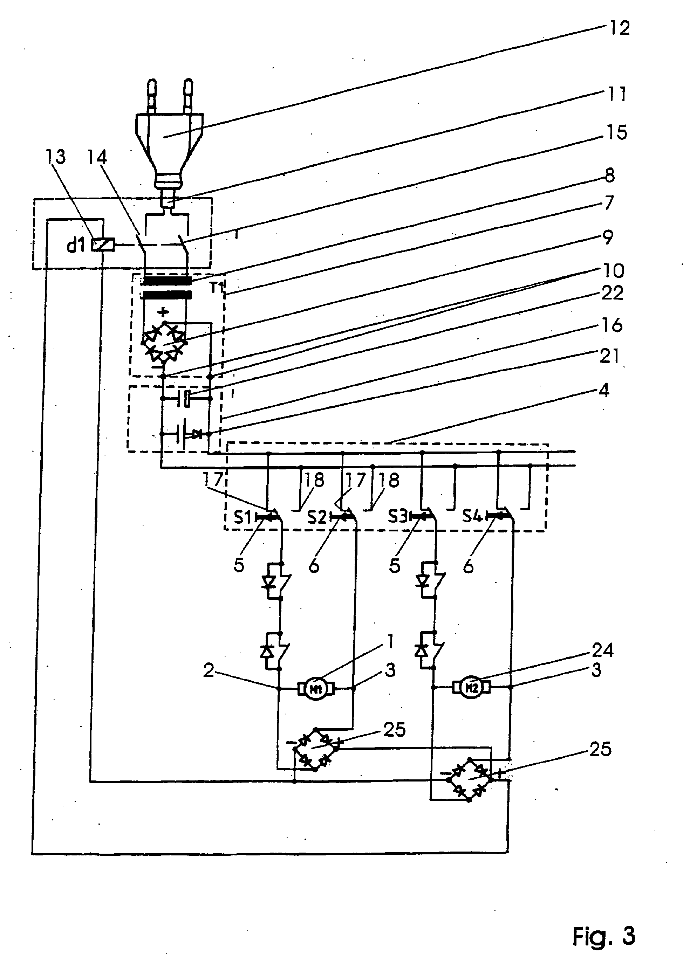

Bei der in Figur 3 dargestellten Ausführungsform ist neben dem ersten Motor 1 ein zweiter Motor 2 angeordnet. Dieser zweite Motor 2 ist auch wie der erste Motor 1 mit einer Steuerschaltung 4 versehen, die wiederum einen ersten Tastschalter 5 und einen zweiten Tastschalter 6 beinhaltet.

Bei dieser Schaltungsanordnung ist das Netztrennrelais 13 nicht mehr direkt zu dem Motor 1 oder dem zweiten Motor 24 parallel geschaltet, sondern eine als Graetzbrücke bekannte Gleichrichterschaltung 25 ist dazwischen geschaltet. Dies geschieht derart, daß an den Wechselknoten der erste Anschluß 2 und der zweite Anschluß 3 des Motors 1 angeschlossen sind. Der Minus- und der Plusknoten der Gleichrichterschaltung 25 ist mit dem Steuereingang des Netztrennrelais 13 verbunden. In gleicher Art und weise ist eine Gleichrichterschaltung 25 auch mit dem zweiten Motor 24 und mit dem Netztrennrelais 13 verbunden. Die Gleichrichterschaltungen 25 bewirken, daß ein Anlegen einer Betriebsspannung an dem ersten Motor 1 keinen Einfluß auf den zweiten Motor 24 und umgekehrt hat. Die Motoren sind also durch die Gleichrichterschaltungen 25 voneinander entkoppelt, obwohl das Anlegen einer Betriebsspannung zwischen ihrem ersten Anschluß 2 und ihrem zweiten Anschluß 3 in jedem Falle ein Anziehen des Netztrennrelais 14 bewirken.

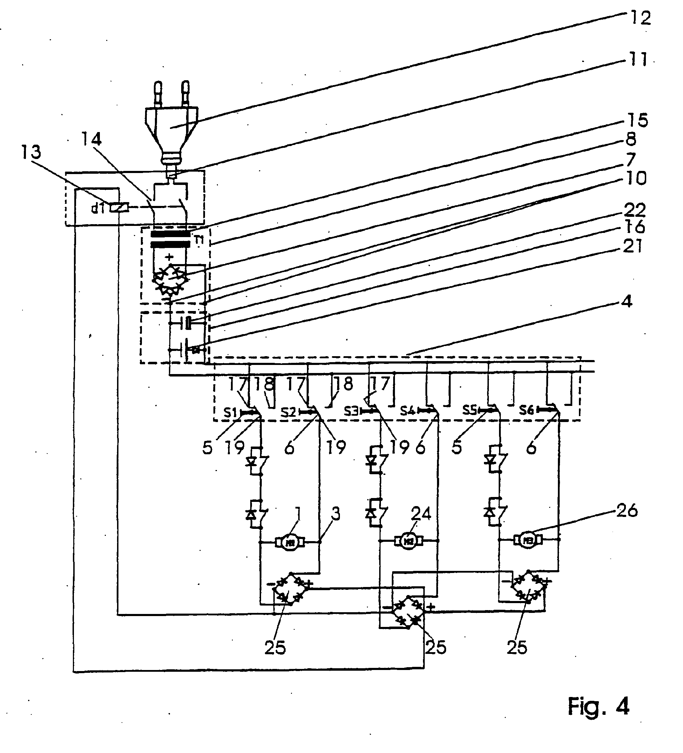

Wie in Figur 4 dargestellt, läßt sich die Schaltungsanordnung gemäß Figur 3 auch um einen dritten Motor 26 und weitere nicht näher dargestellte Motoren erweitern.

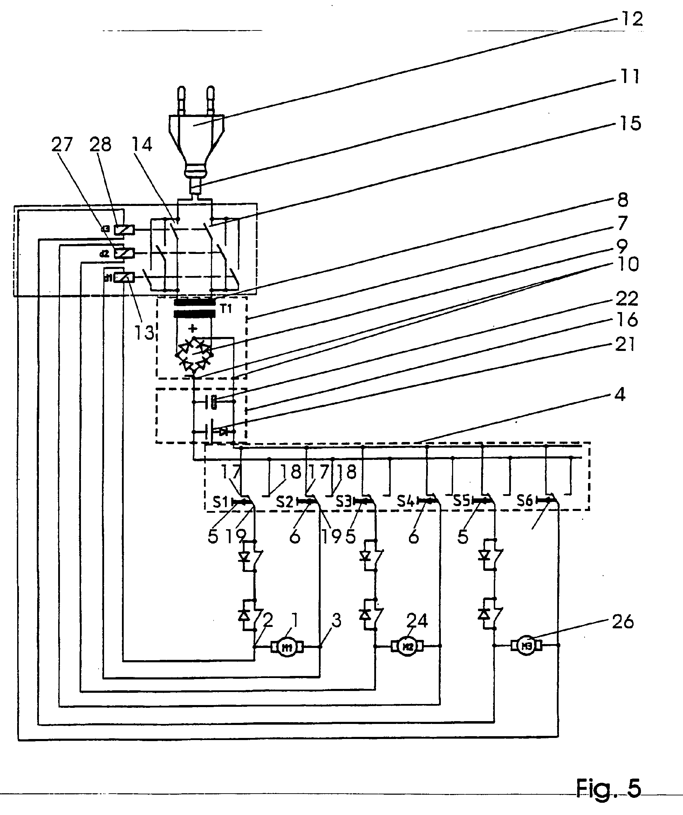

Eine weitere Möglichkeit des Einsatzes mehrerer Motoren 1, 24 und 26 ist in Figur 5 dargestellt. In dieser Schaltungsanordung entfällt für jeden Motor die Gleichrichterschaltung 25. Dafür ist neben dem Netztrennrelais 13, welches für den Motor 1 vorgesehen ist, ein Netztrennrelais 27 für den zweiten Motor 24 und ein Netztrennrelais 28 für den dritten Motor 26 vorgesehen. Jeder Motor hat somit sein "eigenes" Netztrennrelais. Die Wirkungsweise ist jeweils gleich der zu Figur 1 dargestellten Wirkungsweise. Hierzu sind die jeweiligen Relaisschalter 14 und 15 der Netztrennrelais 13, 27 und 28 zu einander parallel geschaltet. Somit bewirkt das Anlegen einer Betriebsspannung an einen der Motoren 1, 24 oder 26 jeweils das Anziehen eines der Netztrennrelais 13, 27 und 28 und durch die Parallelschaltung der Relaisschalter 14 und 15 in jedem Falle ein Durchschalten der Netzwechselspannung auf die Spannungsversorgungsschaltung 7.

### Bezugszeichenliste

1. erster Motor
2. erster Anschluß
3. zweiter Anschluß
4. Steuerschaltung
5. erster Tastschalter
6. zweiter Tastschalter
7. Spannungsversorgungsschaltung
8. Transformator
9. Gleichrichterschaltung
10. Betriebsspannungsausgang
11. Netzverbindung
12. Netzstecker
13. Netztrennrelais
14. erster Relaisschalter
15. zweiter Relaisschalter
16. Hilfsspannungsquelle
17. Wechselkontakt
18. Wechselkontakt
19. Mittenkontakt des ersten Tastschalters
20. Mittenkontakt des zweiten Tastschalters
21. Batterie
22. Kondensator
23. Impulsgeberschaltung
24. zweiter Motor
25. Gleichrichterbrücke
26. dritter Motor
27. Netztrennrelais
28. Netztrennrelais

## Patentansprüche

1. Anordnung zum Verstellen von beweglichen Möbelteilen mit einem Motor, der einen ersten und einen zweiten Anschluß aufweist, einer den Motor steuernden Steuerschaltung, die mit mindestens einem ersten Tastschalter zum Steuern des Motors versehen ist, einer Spannungsversorgungsschaltung mit einem Betriebsspannungsausgang, einer Netzverbindung, die zwischen einem mit einem Wechselspannungsnetz verbindbaren Netzstecker und der Spannungsversorgungsschaltung angeordnet ist, einem Netztrennrelais, das einen Relaisschalter und einen den Relaisschalter steuernden Steuereingang aufweist, wobei der Relaisschalter in der Netzverbindung liegt und sich im nichterregten Zustand in AUS-Stellung befindet, und einer Hilfspannungsquelle, die zu dem Betriebsspannungsausgang parallel geschaltet ist, **dadurch gekennzeichnet, daß**
- der erste Tastschalter (5) mit dem Motor (1) und dem Betriebsspannungsausgang (10) einen Stromkreis bildet und
- entweder der Steuereingang des Netztrennrelais (13) dem Motor (1) parallelgeschaltet ist
- oder eine als Graetzbrücke bekannte Gleichrichterbrücke (25) mit vier Dioden, von denen zwei erste Dioden mit ihren Kathoden in einem Plus-Knoten und mit Anoden mit den Kathoden der beiden zweiten Dioden in je einem Wechselknoten und die Anoden der beiden zweiten Dioden in einem Minusknoten zusammengeschaltet sind, mit je einem Wechselknoten mit dem ersten und dem zweiten Anschluß des Motors verbunden ist und der Plus- und der Minusknoten jeweils mit dem Steuereingang des Netztrennrelais (13) verbunden ist.

2. Anordnung nach Anspruch 1, **dadurch gekennzeichnet, daß** der Betriebsspannungsausgang (10) als Gleichspannungsausgang und der Motor (1) als Gleichspannungsmotor ausgebildet ist.

3. Anordnung nach Anspruch 2, **dadurch gekennzeichnet, daß** ein zweiter Tastschalter (6) vorgesehen ist, daß der erste (5) und der zweite Tastschalter (6) als Wechelschalter ausgebildet sind, deren einer Wechselkontakt (17) mit dem Betriebsspannungsausgang (10) der einen Polarität und deren andere Wechselkontakt (18) mit dem Betriebsspannungsausgang (10) der anderen Polarität verbunden ist, der Mittenkontakt (19) des ersten Tastschalters (5) mit dem ersten Anschluß (2) des Motors (1) und der Mittenkontakt (20) des zweiten Tastschalters (6) mit dem zweiten Anschluß (3) des Motors (1) verbunden ist und jeder Tastschalter (5; 6) im unbetätigten Zustand eine Verbindung zwischen seinem Mittenkontakt (19; 20) und dem Betriebsspannungsausgang (10) mit derselben Polarität wie der jeweils andere Tastschalter (6; 5) aufweist.

4. Anordnung nach einem der Ansprüche 1 bis 3, **dadurch gekennzeichnet, daß** die Motoranordnung, bestehend aus Motor (1) und erstem (5) oder erstem (5) und zweitem Tastschalter (6) zumindest ein zweites Mal angeordnet ist, wobei entweder für jede Motoranordnung je ein Netztrennrelais (13; 27; 28) vorgesehen ist, dessen Steuereingang jeweils zu dem zugehörigen Motor (1; 24; 26) und die Relaisschalter aller Netztrennrelais (13; 27; 28) zueinander parallel geschaltet sind, oder für jede Motoranordnung eine Gleichrichterbrücke (25) vorgesehen ist, deren Wechselknoten mit den Anschlüssen des jeweiligen Motors und dessen Plus- und Minusknoten jeweils gemeinsam mit dem Steuereingang ein und desselben Netztrennrelais (13) verbunden sind.

5. Anordnung nach einem der Anspüche 1 bis 4, **dadurch gekennzeichnet, daß** die Hilfsspannungsquelle (16) aus einer Wechselspannungsquelle besteht.

6. Anordnung nach Anspruch 5, **dadurch gekennzeichnet, daß** die Hilfsspannungsquelle (16) aus einem Netztransformator besteht, der mit dem Wechselspannungsnetz verbunden ist.

7. Anordnung nach einem der Anspüche 1 bis 4, **dadurch gekennzeichnet, daß** die Hilfsspannungsquelle (16) aus einer Gleichspannungsquelle besteht.

8. Anordnung nach Anspruch 7, **dadurch gekennzeichnet, daß** die Hilfsspannungsquelle (16) aus einem Kondensator (22) besteht.

9. Anordnung nach Anspruch 8, **dadurch gekennzeichnet, daß** an dem Relaisschalter (14; 15) des Netztrennrelais (13) eine manuelle Betätigungsvorrichtung vorgesehen ist.

10. Anordnung nach Anspruch 8, **dadurch gekennzeichnet, daß** eine Impulsgeberschaltung (23) vorgesehen ist, die einen Impulsausgang aufweist, der mit dem Netztrennrelais (13) zusätzlich verbunden ist.

11. Anordnung nach Anspruch 7, **dadurch gekennzeichnet, daß** die Hilfsspannungsquelle (16) aus einer Batterie (21) besteht.

12. Anordnung nach einem der Ansprüche 1 bis 11, **dadurch gekennzeichnet, daß** das Netztrennrelais (13; 27; 28) einen zweiten Relaisschalter (15) aufweist oder die Netztrennrelais je einen zweiten Relaisschalter (15) aufweisen und daß jeder Relaisschalter (14; 15) in je einer Leitung der Netzverbindung (11) liegt.

## Claims

1. Assembly for adjusting mobile elements of furniture, with a motor displaying a first and a second connection, a control circuit for controlling the motor, which is provided with at least a first push-button switch for controlling the motor, a power supply circuit with an operating voltage output, a mains connection located between a mains plug that can be connected to an alternating-current mains and the power supply circuit, a mains isolating relay displaying a relay switch and a control input controlling the relay switch, where the relay switch is located in the mains connection and is in OFF position when unexcited, and an auxiliary power source that is connected in parallel to the operating-voltage output, **characterised in that**
- the first push-button switch (5) forms an electric circuit with the motor (1) and the operating voltage output (10) and
- either the control input of the mains isolating relay (13) is connected in parallel to the motor (1)
- or a rectifier bridge (25), known as a Graetz bridge, which has four diodes, of which two first diodes have their cathodes interconnected in a positive node, while their anodes are each interconnected with the cathodes of the two second diodes in an alternating-current node and the anodes of the two second diodes are interconnected in a negative node, and where one alternating-current node each is connected to the first and second connection of the motor and the positive and negative node are each connected to the control input of the mains isolating relay (13) .

2. Assembly according to Claim 1, **characterised in that** the operating-voltage output (10) is designed as a DC output and the motor (1) as a DC motor.

3. Assembly according to Claim 2, **characterised in that** a second push-button switch (6) is provided and **in that** the first (5) and the second push-button switch 6) are designed as changeover switches, one of whose changeover contacts (17) is connected to the operating-voltage output (10) of the one polarity, while the other changeover contact (18) is connected to the operating-voltage output (10) of the other polarity and the centre contact (19) of the first push-button switch (5) is connected to the first connection (2) of the motor (1) and the centre contact (20) of the second push-button switch (6) is connected to the second connection (3) of the motor (1) and, when not operated, each push-button switch (5; 6) displays a connection between its centre contact (19; 20) and the operating-voltage output (10) with the same polarity as the other push-button switch (6; 5).

4. Assembly according to one of Claims 1 to 3, **characterised in that** the motor assembly, comprising the motor (1) and the first (5) or the first (5) and second push-button switch (6), is present at least in duplicate, where either each motor assembly is provided with a mains isolating relay (13; 27; 28), the control input of which is connected in parallel to the associated motor (1; 24; 26), while the relay switches of all mains isolating relays (13; 27; 28) are connected in parallel to each other, or each motor assembly is provided with a rectifier bridge (25), the alternating-current node of which is connected to the connections of the respective motor and whose positive and negative nodes are each jointly connected to the control input of one and the same mains isolating relay (13).

5. Assembly according to one of Claims 1 to 4, **characterised in that** the auxiliary power source (16) consists of an alternating-current source.

6. Assembly according to Claim 5, **characterised in that** the auxiliary power source (16) consists of a mains transformer connected to the alternating-current mains.

7. Assembly according to one of Claims 1 to 4, **characterised in that** the auxiliary power source (16) consists of a direct-current source.

8. Assembly according to Claim 7, **characterised in that** the auxiliary power source (16) consists of a capacitor (22).

9. Assembly according to Claim 8, **characterised in that** a manual operating device is provided on the relay switch (14; 15) of the mains isolating relay (13).

10. Assembly according to Claim 8, **characterised in that** a trigger circuit (23) is provided having a pulse output that is additionally connected to the mains isolating relay (13).

11. Assembly according to Claim 7, **characterised in that** the auxiliary power source (16) consists of a battery (21).

12. Assembly according to one of Claims 1 to 11, **characterised in that** the mains isolating relay (13; 27; 28) displays a second relay switch (15), or the mains isolating relays each display a second relay switch (15) and **in that** each relay switch (14; 15) is located in a separate line of the mains connection (11).

## Revendications

1. Dispositif de réglage d'éléments mobilier mobiles, comprenant un moteur muni d'une premier et d'une deuxième connexion, un circuit de commande commandant le moteur et muni d'au moins un bouton poussoir pour contrôler le moteur, un circuit d'alimentation avec une sortie de tension d'alimentation, un branchement sur le secteur disposé entre une fiche de secteur connectable à un réseau de tension alternative et le circuit d'alimentation, un relais de coupure de réseau comprenant un interrupteur de relais et une entrée de commande pour commander l'interrupteur, l'interrupteur de relais étant situé dans le branchement de secteur et se trouvant dans la position d'interruption en condition non-excitée, et une source de tension auxiliaire connectée en parallèle avec la sortie de tension d'alimentation, **caractérisé en ce que**
- le premier bouton poussoir (5) forme un circuit avec le moteur (1) et la sortie de tension d'alimentation (10) et
- l'entrée de commande du relais de coupure de réseau (13) est connectée en parallèle avec le moteur (1)
- ou un redresseur en pont (25) connu comme pont de Graetz qui comporte quatre diodes dont deux premières diodes sont interconnectées par leur cathodes dans un noeud positif et par des anodes avec les cathodes des deux deuxième diodes dans un noeud alternatif et les anodes des deux deuxièmes diodes sont interconnectées dans un noeud négatif est respectivement connecté à l'un des noeuds alternatifs comprenant la première et la deuxième connexion du moteur, et les noeuds positif et négatif sont respectivement connectés à l'entrée de commande.

2. Dispositif selon la revendication 1, **caractérisé en ce que** la sortie de tension d'alimentation (10) est formée comme une sortie de courant continue d'alimentation et le moteur (1) est formé comme un moteur à courant continu.

3. Dispositif selon la revendication 2, **caractérisé en ce qu'**il est prévu un deuxième bouton poussoir (6), que le premier (5) et le deuxième bouton poussoir (6) sont formés comme des interrupteurs va-et-vient dont l'un contact alternant (17) est connecté à la sortie de tension d'alimentation (10) de l'une polarité et dont l'autre contact alternant (18) est connecté à la sortie de tension d'alimentation de l'autre polarité, que le contact central (19) du premier bouton poussoir (5) est connecté à la première connexion (2) du moteur (1) et le contact central (20) du deuxième bouton poussoir (6) et connecté à la deuxième connexion (3) du moteur (1) et que dans l'état non-opéré, chaque bouton poussoir (5; 6) présente une connexion entre son contact central (19; 20) et la sortie de tension d'alimentation (10) de même polarité que l'autre bouton poussoir (6; 6) respectif.

4. Dispositif selon l'une des revendications 1 à 3, **caractérisé en ce que** l'ensemble de moteur qui se compose du moteur (1) et du premier bouton poussoir (5) ou du premier (5) et deuxième bouton poussoir (6), est disposé au moins une deuxième fois, avec un relais de coupure de réseau (13; 27; 28) respectif étant prévu pour chaque ensemble de moteur dont l'entrée de commande est respectivement connectée en parallèle avec le moteur (1; 24; 26) associé et les interrupteurs de relais de l'ensemble des relais de coupure de réseau (13; 27; 28) sont connectés en parallèle l'un avec l'autre, ou que pour chaque ensemble de moteur il est prévu un redresseur en pont (25) dont les noeuds alternatifs sont connectés aux connexions du moteur respectif et à ses noeuds positif et négatif conjointement avec l'entrée de commande du même relais de coupure de réseau (13).

5. Dispositif selon l'une des revendications 1 à 4, **caractérisé en ce que** la source de tension auxiliaire (16) consiste en une source de tension alternative.

6. Dispositif selon la revendication 5, **caractérisé en ce que** la source de tension auxiliaire (16) consiste en un transformateur d'alimentation qui est connecté au réseau de tension alternative.

7. Dispositif selon l'une des revendications 1 à 4, **caractérisé en ce que** la source de tension auxiliaire (16) consiste en une source à tension continue.

8. Dispositif selon la revendication 7, **caractérisé en ce que** la source de tension auxiliaire (16) consiste en un condensateur (22).

9. Dispositif selon la revendication 8, **caractérisé en ce que** sur l'interrupteur de relais (14; 15) du relais de coupure de réseau (13) il est prévu un organe de manoeuvre manuel.

10. Dispositif selon la revendication 8, **caractérisé en ce qu'**il est prévu un circuit de générateur d'impulsions (23) comprenant une sortie d'impulsions qui est connectée en plus au relais de coupure de réseau (13).

11. Dispositif selon la revendication 7, **caractérisé en ce que** la source de tension auxiliaire (16) consiste en une batterie (21).

12. Dispositif selon l'une des revendications 1 à 11, **caractérisé en ce que** le relais de coupure de réseau (13; 27; 28) comporte un deuxième interrupteur de relais (15) ou que les relais de coupure de réseau respectivement comportent un deuxième interrupteur de relais (15) et **en ce que** chaque interrupteur de relais (14; 15) est situé dans un conduit respectif du branchement sur le secteur (11).
